# FASCICULE DE BREVET EUROPEEN

(11) **EP 3 984 816 B1**
(45) Date de publication et mention de la délivrance du brevet: **13.09.2023**
(21) Numéro de dépôt: 21202094.5
(22) Date de dépôt: 12.10.2021
(51) Int. Cl.: B60P 3/24, E03F 7/10

(54) **CUVE POUR CAMION HYDROCUREUR**
TANK FÜR SAUGWAGEN
TANK FOR SEWER CLEANING TRUCK

(30) Priorité: 13.10.2020 FR 2010433
(43) Date de publication de la demande: 20.04.2022
(73) Titulaire: BAROCLEAN, 10140 Vendeuvre sur Barse (FR)
(72) Inventeur: PFISTER, Bernard, 54710 Ludres (FR)
(74) Mandataire: Littolff, Denis

(56) Documents cités:
- CH-A- 173 238
- GB-A- 838 662
- US-A- 4 935 984

## Description

La présente invention a pour objet une cuve pour hydrocureur selon le préambule de la revendication 1. Les documents GB 838662 A; US4935984 A; et CH 173238 A divulguent une telle cuve.

L'invention concerne par ailleurs un camion hydrocureur, équipé d'une cuve selon l'invention.

De manière connue, un tel camion hydrocureur est destiné au nettoyage de structures d'assainissement, telles que notamment des canalisations, fosses septiques, citernes, tuyaux, etc., au moyen d'eau contenue dans sa cuve, injectée sous pression. De fait, les boues, et les éventuels résidus obstruant, ainsi détachés des parois et délogés des structures à nettoyer, peuvent ensuite simplement être aspirés, par exemple au moyen d'une pompe à vide, et récupérés dans le compartiment dédié de la citerne, en vue d'une évacuation vers un centre de traitement de déchets. A ce propos, une fois le camion hydrocureur parvenu à un tel site, le déchargement des boues et des eaux usées stockées dans la cuve peut s'effectuer par vidange à l'aide d'un tuyau raccordé au compartiment correspondant. Il peut également être effectué par bennage, suite à un soulèvement vers l'arrière de la cuve, et à l'ouverture au moins partielle de la porte arrière permettant une évacuation par gravité des matières liquides et solides.

Une telle manière de procéder suppose le recours à des moyens de basculement, généralement hydrauliques, montés entre le châssis du camion hydrocureur et la cuve, qui doivent être manipulés par un opérateur se tenant à proximité immédiate du camion. Bien que couramment mise en oeuvre, une telle solution présente néanmoins l'inconvénient de reposer sur des moyens mécaniques complexes, par conséquent coûteux, qui non seulement alourdissent de manière intempestive l'ensemble du véhicule mais supposent également une maintenance régulière pour limiter le risque de panne intempestive. Par ailleurs, de manière connue, le déplacement de la cuve entre sa position horizontale et sa position renversée vers l'arrière est synonyme de danger potentiel pour l'opérateur chargé de la manoeuvre, évoluant sur la zone de travail. Ainsi, afin d'éviter un éventuel accident, celui-ci doit faire preuve d'une grande vigilance, voire suivre un protocole de sécurité, inévitablement contraignant et chronophage.

Le but de la présente invention est de répondre aux problématiques décrites ci-dessus et de fournir une solution permettant de vidanger une cuve de camion hydrocureur en toute sécurité au travers de moyens de structure simplifiée conduisant à une réduction générale des coûts correspondants.

A cet effet, la présente invention concerne une cuve du genre indiqué en préambule, caractérisée en ce que la cloison de séparation présente une section en demi-cercle.

Selon le cas, la cuve selon l'invention peut comprendre l'une ou plusieurs des caractéristiques suivantes :
- la cloison de séparation forme avec l'axe X un angle α compris entre 5° et 30°.
- la cloison de séparation présente une extrémité frontale et une extrémité arrière, reliées respectivement à la paroi frontale et au fond de la cuve.
- la cloison de séparation présente un plan de symétrie et est disposée dans la cuve de manière telle que son plan de symétrie correspond avec le plan de symétrie de la paroi périphérique.
- la cloison de séparation présente un rayon croissant progressivement depuis son extrémité frontale vers son extrémité arrière.
- le rayon de la cloison de séparation s'échelonne entre 400mm et 1000mm, tandis que le diamètre de la paroi périphérique est compris entre 800mm à 2300mm.
- la cloison de séparation comporte un orifice destiné à permettre une communication entre le compartiment pour la réception d'une eau usée et le compartiment de stockage d'une eau de curage.
- la cloison de séparation consiste en une tôle en aluminium.

Les dessins annexés illustrent l'invention :

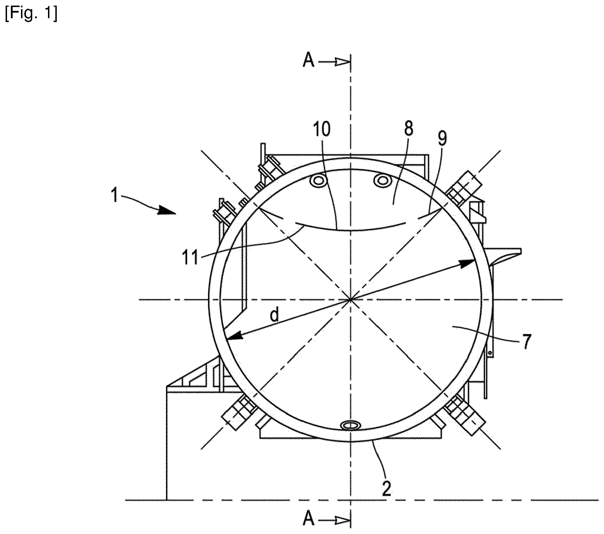

[Fig.1] représente une vue de face d'une variante de réalisation de la cuve selon l'invention, et
[Fig.2] représente une vue en coupe selon AA de la cuve illustrée à la figure 1.

En référence aux dessins, la présente invention concerne une cuve 1 pour camion hydrocureur, comportant une paroi périphérique 2 d'allure cylindrique dont une extrémité est fermée par une paroi frontale 3 tandis que l'autre extrémité, formant une ouverture de vidange 4 d'au moins une partie du volume interne de la cuve, comporte une porte arrière 5. A ce propos, il est à noter que dans d'autres variantes de réalisation non illustrées, la porte arrière 5 peut être remplacée par une paroi arrière fixe, munie de l'ouverture de vidange 4 ou comporter elle-même l'ouverture de vidange 4. L'écoulement des matières à vidanger suppose alors simplement un retrait de moyens d'obturation de l'ouverture de vidange 4, la porte 5 pouvant, le cas échéant, être maintenue fermée.

Dans une telle cuve 1, une portion de la paroi périphérique 2 définit classiquement le fond 6 de la cuve 1, tandis que le volume interne, d'axe X, est organisé en un compartiment 7 pour le stockage d'une eau de curage et un compartiment 8 pour la réception d'une eau usée au moyen d'une cloison de séparation 9. Par ailleurs, une telle cuve 1 présente sur sa paroi périphérique 2 au moins un orifice communiquant avec le compartiment 7 pour le stockage d'une eau de curage et un orifice communiquant avec le compartiment 8 pour la réception d'une eau usée permettant au moins le remplissage de ces compartiments.

Dans le cadre de l'invention, la cloison de séparation 9, qui consiste par exemple en une tôle en aluminium, s'étend avantageusement de manière inclinée entre la paroi frontale 3 et l'ouverture de vidange 4. Elle présente de la sorte une face supérieure 10 orientée en direction de l'ouverture de vidange 4, et une face inférieure 11 orientée en direction du fond 6 de la cuve 1. Il convient de noter que le compartiment 7 pour le stockage d'une eau de curage s'étend alors entre la paroi frontale 3, la paroi périphérique 2 et la face inférieure 11 de la cloison de séparation 9, tandis que le compartiment 8 pour la réception d'une eau usée s'étend entre la paroi périphérique 2, l'ouverture de vidange 4 et la face supérieure 11 de la cloison de séparation 9.

Le fait de disposer la cloison de séparation 9 d'une telle manière entre les deux compartiments 7, 8 permet de diriger les matières solides et liquides contenues dans le compartiment pour le stockage d'une eau usée 8 en direction de l'ouverture de vidange 4. Ainsi, l'opération de vidange de la cuve 1, au niveau d'une zone de récupération de déchets, ne nécessite qu'une ouverture de la porte arrière 5 et s'effectue par simple écoulement de l'eau usée au travers de l'ouverture de vidange 4, indépendamment de toute inclinaison vers l'arrière de la cuve 1. Il en va de même pour les variantes de réalisation de la cuve 1 évoquées ci-dessus, dans lesquelles l'ouverture de vidange 4 est formée sur la porte arrière 5 ou une paroi arrière fixe.

Bien entendu, la cloison de séparation 9 peut être plus ou moins inclinée selon les modèles de cuve 1 réalisés et, conformément à l'invention, former ainsi avec l'axe X un angle α compris entre 5° et 30°. A ce propos, dans la variante de réalisation illustrée, l'angle α est avantageusement égal à 20°, ce qui permet d'obtenir une vitesse d'écoulement des matières contenues dans le compartiment 8, ni trop rapide ni trop lente.

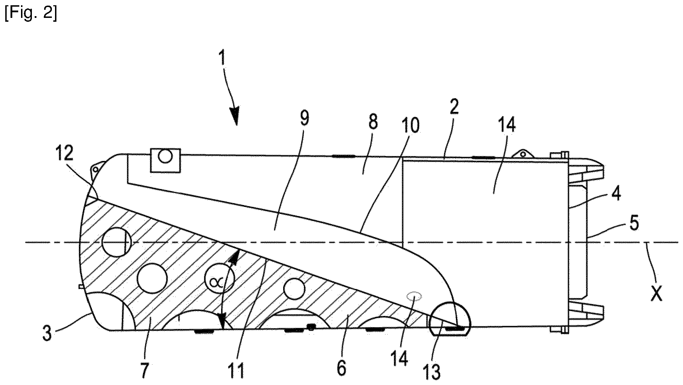

D'autre part, selon une caractéristique de l'invention, la cloison de séparation 9 peut présenter, comme illustré à la figure 2, une extrémité frontale 12 reliée à la paroi frontale 3 de la cuve 1 et une extrémité arrière 13 reliée au fond 6 de la cuve 1, de sorte que toute une partie arrière 14 du volume interne de la cuve 1 communique avec l'ouverture de vidange 4.

Selon i'invention la cloison de séparation 9 présente une section en demi-cercle et peut être disposée dans la cuve 1 de manière telle que son plan de symétrie correspond avec celui de la paroi périphérique 2. En somme, la cloison de séparation 9 forme ainsi une structure en forme de gouttière permettant de diriger le flux d'eau usée contenu dans le compartiment 8 vers l'ouverture de vidange 4, et par conséquent de favoriser l'écoulement par gravité des matières à évacuer au travers de celle-ci.

Il est à noter que dans un objectif similaire, la cloison de séparation 9 présente en outre avantageusement un rayon croissant progressivement depuis son extrémité frontale 12 vers son extrémité arrière 13.

A ce propos, conformément à l'invention, le rayon de la cloison de séparation 9 s'échelonne de préférence entre 400mm et 1000mm, tandis que le diamètre d de la paroi périphérique 2 est de préférence compris entre 800mm à 2300mm.

Une caractéristique additionnelle de la cuve 1 selon l'invention est encore définie par le fait que la cloison de séparation 9 comporte un orifice (non illustré) destiné à permettre une communication entre le compartiment 8 pour la réception d'une eau usée et le compartiment 7 de stockage d'une eau de curage. Ceci permet avantageusement de remplir l'intégralité du volume interne de la cuve 1 d'eau propre en vue du nettoyage de la cuve 1.

Il ressort clairement de ce qui précède que la cuve 1 selon l'invention permet d'atteindre les objectifs mentionnés en préambule. En effet, en pratique, dans la mesure où la cuve 1 ne nécessite plus d'être basculée en arrière pour permettre la vidange de son compartiment 8 de stockage d'eau usée, elle peut être montée directement sur le châssis d'un camion hydrocureur, en l'absence de tout moyen de basculement. La construction d'un camion hydrocureur équipé d'une telle cuve 1 est ainsi simplifiée, ce qui permet de réduire les coûts correspondants. Par ailleurs, un tel véhicule est de mise en oeuvre à la fois plus simple et plus sécurisée ce qui permet d'améliorer à la fois les conditions de travail des opérateurs et la cadence de travail de ces derniers.

## Revendications

1. Cuve (1) pour camion hydrocureur, comportant une paroi périphérique (2) d'allure cylindrique, délimitant son volume interne, et dont une extrémité est fermée par une paroi frontale (3) tandis que l'autre extrémité comporte une ouverture de vidange (4) d'au moins une partie du volume interne de la cuve (1), une portion de la paroi périphérique (2) définissant le fond (6) de la cuve (1), et ledit volume interne, d'axe X, étant organisé en un compartiment (7) pour le stockage d'une eau de curage et un compartiment (8) pour la réception d'une eau usée au moyen d'une cloison de séparation (9), ladite cuve (1) présentant en outre sur sa paroi périphérique (2) au moins un orifice communiquant avec ledit compartiment (7) pour le stockage d'une eau de curage et un orifice communiquant avec le compartiment (8) pour la réception d'une eau usée, la cloison de séparation (9) s'étendant de manière inclinée entre la paroi frontale (3) et l'ouverture de vidange (4), de sorte à présenter une face supérieure (10) orientée en direction de l'ouverture de vidange (4), et une face inférieure (11) orientée en direction du fond (6) de la cuve (1), et le compartiment (7) pour la réception d'une eau de curage s'étendant entre la paroi frontale (3), la paroi périphérique (2) et la face inférieure (11) de la cloison de séparation (9), tandis que le compartiment (8) pour la réception d'une eau usée s'étend entre la paroi périphérique (2), l'ouverture de vidange (4) et la face supérieure (10) de la cloison de séparation (9), **caractérisée en ce que** la cloison de séparation (9) présente une section en demi-cercle.

2. Cuve (1) selon la revendication 1, **caractérisée en ce que** la cloison de séparation (9) présente un rayon croissant progressivement depuis son extrémité frontale (12) vers son extrémité arrière (13).

3. Cuve (1) selon la revendication 2, **caractérisée en ce que** le rayon de la cloison de séparation (9) s'échelonne entre 400mm et 1000mm, tandis que le diamètre d de la paroi périphérique (2) est compris entre 800mm à 2300mm.

4. Cuve (1) selon l'une quelconque des revendications précédentes, **caractérisée en ce que** la cloison de séparation (9) comporte un orifice destiné à permettre une communication entre le compartiment (8) pour la réception d'une eau usée et le compartiment (7) de stockage d'une eau de curage.

5. Cuve (1) selon l'une quelconque des revendications précédentes, **caractérisée en ce que** la cloison de séparation (9) forme avec l'axe X un angle α compris entre 5° et 30°.

6. Cuve (1) selon l'une quelconque des revendications précédentes, **caractérisée en ce que** la cloison de séparation (9) présente une extrémité frontale (12) et une extrémité arrière (13), reliées respectivement à la paroi frontale (3) et au fond (6) de la cuve (1).

7. Cuve (1) selon l'une quelconque des revendications précédentes, **caractérisée en ce que** la cloison de séparation (9) présente un plan de symétrie et est disposée dans la cuve (1) de manière telle que celui-ci correspond avec le plan de symétrie de la paroi périphérique (2).

8. Cuve (1) selon l'une quelconque des revendications précédentes, **caractérisée en ce que** la cloison de séparation (9) consiste en une tôle en aluminium.

9. Camion hydrocureur, **caractérisé en ce qu'**il comporte une cuve (1) selon l'une quelconque des revendications précédentes.

## Patentansprüche

1. Tank (1) für einen Saugwagen, der eine Umfangswand (2) mit zylindrischem Aussehen aufweist, die sein Innenvolumen begrenzt, und deren eines Ende durch eine vordere Wand (3) geschlossen ist, während das andere Ende eine Öffnung (4) zum Entleeren von mindestens einem Teil des Innenvolumens des Tanks (1) aufweist, wobei ein Abschnitt der Umfangswand (2) den Boden (6) des Tanks (1) definiert, und das Innenvolumen, mit X-Achse, in eine Kammer (7) zum Lagern eines Spülwassers und eine Kammer (8) zum Aufnehmen eines Abwassers mittels einer Trennwand (9) eingeteilt ist, wobei der Tank (1) ferner an seiner Umfangswand (2) eine Mündung, die mit der Kammer (7) zum Lagern eines Spülwassers kommuniziert, und eine Mündung, die mit der Kammer (8) zum Aufnehmen eines Abwassers kommuniziert, vorweist, wobei die sich Trennwand (9) auf eine geneigte Weise zwischen der vorderen Wand (3) und der Entleerungsöffnung (4) so erstreckt, dass sie eine obere Fläche (10), die in Richtung der Entleerungsöffnung (4) ausgerichtet ist, und eine untere Fläche (11), die in Richtung des Bodens (6) des Tanks (1) ausgerichtet ist, vorweist, und sich die Kammer (7) zum Aufnehmen eines Spülwassers zwischen der vorderen Wand (3), der Umfangswand (2) und der unteren Fläche (11) der Trennwand (9) erstreckt, während sich die Kammer (8) zum Aufnehmen eines Abwassers zwischen der Umfangswand (2), der Entleerungsöffnung (4) und der oberen Fläche (10) der Trennwand (9) erstreckt, **dadurch gekennzeichnet, dass** die Trennwand (9) einen Halbkreisbereich vorweist.

2. Tank (1) nach Anspruch 1, **dadurch gekennzeichnet, dass** die Trennwand (9) einen schrittweise zunehmenden Radius von ihrem vorderen Ende (12) zu ihrem hinteren Ende (13) vorweist.

3. Tank (1) nach Anspruch 2, **dadurch gekennzeichnet, dass** der Radius der Trennwand (9) zwischen 400 mm und 1000 mm abgestuft ist, während der Durchmesser der Umfangswand (2) zwischen 800 mm und 2300 mm liegt.

4. Tank (1) nach einem der vorstehenden Ansprüche, **dadurch gekennzeichnet, dass** die Trennwand (9) eine Mündung aufweist, die dafür bestimmt ist, eine Kommunikation zwischen der Kammer (8) zum Aufnehmen von Abwasser und der Kammer (7) zum Lagern eines Spülwassers zu ermöglichen.

5. Tank (1) nach einem der vorstehenden Ansprüche, **dadurch gekennzeichnet, dass** die Trennwand (9) mit der X-Achse einen Winkel α zwischen 5° und 30° ausbildet.

6. Tank (1) nach einem der vorstehenden Ansprüche, **dadurch gekennzeichnet, dass** die Trennwand (9) ein vorderes Ende (12) und ein hinteres Ende (13) vorweist, die jeweils mit der vorderen Wand (3) und dem Boden (6) des Tanks (1) verbunden sind.

7. Tank (1) nach einem der vorstehenden Ansprüche, **dadurch gekennzeichnet, dass** die Trennwand (9) eine Symmetrieebene vorweist und in dem Tank (1) derart angeordnet ist, dass diese der Symmetrieebene der Umfangswand (2) entspricht.

8. Tank (1) nach einem der vorstehenden Ansprüche, **dadurch gekennzeichnet, dass** die Trennwand (9) aus einem Aluminiumblech besteht.

9. Saugwagen, **dadurch gekennzeichnet, dass** er einen Tank (1) nach einem der vorstehenden Ansprüche aufweist.

## Claims

1. A tank (1) for a vacuum truck, comprising a cylindrical peripheral wall (2), delimiting its internal volume, and one end of which is closed by a front wall (3) while the other end comprises an opening (4) for emptying at least part of the internal volume of the tank (1), a portion of the peripheral wall (2) defining the bottom (6) of the tank (1), and said internal volume, having an axis X, being organized into a compartment (7) for storing cleaning water and a compartment (8) for receiving wastewater by means of a separating partition (9), said tank (1) also having on its peripheral wall (2) at least one hole in communication with said compartment (7) for storing cleaning water and one hole in communication with the compartment (8) for receiving wastewater, the separating partition (9) extending with an incline between the front wall (3) and the emptying opening (4) so as to have an upper face (10) oriented toward the emptying opening (4) and a lower face (11) oriented toward the bottom (6) of the tank (1), and the compartment (7) for receiving cleaning water extending between the front wall (3), the peripheral wall (2) and the lower face (11) of the separating partition (9) while the compartment (8) for receiving wastewater extends between the peripheral wall (2), the emptying opening (4) and the upper face (10) of the separating partition (9), **characterized in that** the separating partition (9) has a semicircular cross-section.

2. The tank (1) according to claim 1, **characterized in that** the separating partition (9) has a radius which gradually increases from its front end (12) toward its rear end (13).

3. The tank (1) according to claim 2, **characterized in that** the radius of the separating partition (9) ranges between 400 mm and 1000 mm, while the diameter d of the peripheral wall (2) is between 800 mm and 2300 mm.

4. The tank (1) according to any of the preceding claims, **characterized in that** the separating partition (9) comprises a hole intended to allow communication between the compartment (8) for receiving wastewater and the compartment (7) for storing cleaning water.

5. The tank (1) according to any of the preceding claims, **characterized in that** the separating partition (9) forms with the axis X an angle α of between 5° and 30°.

6. The tank (1) according to any of the preceding claims, **characterized in that** the separating partition (9) has a front end (12) and a rear end (13), connected respectively to the front wall (3) and to the bottom (6) of the tank (1).

7. The tank (1) according to any of the preceding claims, **characterized in that** the separating partition (9) has a plane of symmetry and is arranged in the tank (1) in such a way that said plane of symmetry corresponds to the plane of symmetry of the peripheral wall (2).

8. The tank (1) according to any of the preceding claims, **characterized in that** the separating partition (9) consists of an aluminum sheet.

9. A vacuum truck, **characterized in that** it comprises a tank (1) according to any of the preceding claims.
